Europäisches Patentamt

European Patent Office

Office européen des brevets

(19)

(11) Publication number: **0 071 420**
**B1**

# EUROPEAN PATENT SPECIFICATION

(12)

(45) Date of publication of patent specification: **18.09.85**

(21) Application number: **82303879.9**

(22) Date of filing: **22.07.82**

(51) Int. Cl.⁴: **F 23 D 17/00,** F 23 R 3/36,
F 02 C 7/236, F 02 C 7/232

(54) Dual fuel injection nozzles.

(30) Priority: **23.07.81 US 285993**

(43) Date of publication of application:
**09.02.83 Bulletin 83/06**

(45) Publication of the grant of the patent:
**18.09.85 Bulletin 85/38**

(84) Designated Contracting States:
**CH DE FR GB IT LI**

(56) References cited:
**FR-A-1 002 686**
**FR-A-1 249 283**
**FR-A-2 095 475**
**FR-A-2 461 816**
**GB-A- 577 062**
**GB-A-2 003 552**
**GB-A-2 016 673**
**GB-A-2 035 540**
**GB-A-2 041 085**
**GB-A-2 050 592**
**US-A-3 763 650**
**US-A-3 774 851**
**US-A-3 826 080**

(73) Proprietor: **SOLAR TURBINES INCORPORATED**
**2200 Pacific Highway P.O. Box 80966**
**San Diego California 92138 (US)**

(72) Inventor: **Faulkner, Robie Linwood**
**9857, Mission Gorge Road**
**Santee California 92071 (US)**

(74) Representative: **Brunner, Michael John et al**
**GILL JENNINGS & EVERY 53-64 Chancery Lane**
**London WC2A 1HN (GB)**

Courier Press, Leamington Spa, England.

# Description

The present invention relates to dual fuel injection nozzles of the air blast type, specifically and more particularly for use in gas turbine engines to enable selective operation on either a liquid fuel or a gaseous fuel such as natural gas or sewage gas, or on dissimilar fuels at the same time.

Operation on both liquid and gaseous fuels is often an important capability of a gas turbine engine. In pumping applications, for example, this makes it possible to operate the engine on almost any combustible product being pumped.

Also, dual fuel operation capability makes it possible to operate the gas turbine engine on the most economical of available fuels and to continue operation of the engine when the supply of a particular fuel is limited or the fuel becomes unavailable or is interrupted.

Furthermore, in some instances, it may be easier to start an engine on a gaseous fuel, but impractical to run it on a fuel of that character. Dual fuel operating capability solves that problem.

In other circumstances, it may be desirable to operate the engine on two different types of fuel simultaneously.

Gas turbine engines that can be operated on both gaseous and liquid fuels are not new and a dual fuel injector affording this capability is disclosed in GB—A—2035540. This document discloses a dual fuel injection nozzle for introducing liquid and/or gaseous fuel and combustion air, in use, into a combustor, the nozzle having an elongate cylindrical body with a primary air passage extending through an opening at one discharge end of the body; an annular liquid fuel passage concentrically surrounding the body, and annular gaseous fuel passage concentrically surrounding the body and opening adjacent to the discharge end of the body; and means for introducing liquid and gaseous fuel into the liquid fuel passage and gaseous fuel passage respectively, whereby, in use, liquid and/or gaseous fuel and air are mixed upon leaving the nozzle. Such nozzle is hereinafter referred to as of the kind described. However, in the particular nozzle described the liquid fuel passage opens into the primary air passage through ports part way along the body and the gaseous fuel passage opens immediately beyond an outwardly flared downstream end of the body where the primary air flow is diverging. In consequence liquid fuel and gaseous fuel are entrained by, and mixed with, the combustion air in a significantly different manner which can lead to control problems upon fuel changeover.

According to the present invention a dual fuel injection nozzle of the kind described is characterised in that the liquid fuel passage is formed between the body and a surrounding liquid fuel shroud and opens towards the longitudinal axis of the body immediately beyond the discharge end of the body; and in that the gaseous fuel passage is formed between the liquid fuel shroud and a surrounding gaseous fuel shroud and opens through an annular array of discharge ports inclined towards the longitudinal axis and positioned immediately beyond the discharge end of the liquid fuel shroud.

Preferably such a nozzle has means in the primary air passage for imparting a swirl to air passing through the air passage.

The nozzle may also have a passage in the body through which air under pressure can be introduced into the primary air passage to promote the atomization of liquid fuel during start-up.

Such nozzles are superior to those typically available in that present state-of-the-art liquid fuel-in-air blast atomizing techniques are combined with a new and novel gas mixing technique and also with air assist to promote atomization at light-off.

The nozzle preferably includes an air shroud forming a secondary air passage around the gas shroud, the secondary air passage being tapered at its discharge side towards the longitudinal axis of the body at a position beyond, the one end thereof.

A thin film of liquid fuel is thus discharged in an annulus between two, swirling, primary and secondary streams of air to optimize the atomization characteristics. More specifically, the filmed liquid contacts a high velocity swirling stream of primary combustion air exiting from the primary air passage, atomizing the fuel and initiating the formation of a fuel-air mixture. At the same time the swirling secondary air flows radially inward, continuing the atomization of the fuel and mixing with it the centrally discharged, swirling air.

A third stream of swirling air can be contacted with the atomized fuel and just discussed streams of swirling air to create the proper fuel-air stoichiometry and the fuel-air mixture swirl angle, distribution, and recirculation needed for efficient combustion.

In preferred embodiments of the invention, operation on gaseous fuels is similar. Carefully designed ports direct the fuel radially inward where it mixes with the swirling secondary air streams without impinging on the secondary air shroud, thereby avoiding the flow disturbances and consequent loss of combustion efficiency this has caused in the past. The gas-secondary air mixture then expands radially outward and is mixed with the third, outer stream of swirling air. As in the case of liquid fuel operation, this creates the fuel-air stoichiometry and the fuel-air mixture swirl angle, distribution, and recirculation needed for efficient combustion.

Yet another advantage of the present invention, attributable at least in part to these novel dual fuel injection nozzles is that a gas turbine engine equipped with it can be started on either a gas or liquid fuel and that switching can be accomplished while the engine is under load and in a matter of a few seconds.

A further advantage of these dual fuel injection nozzles is that they are compatible with air assist which may be required during light-off (or start-up) of a gas turbine engine when the compressor is typically rotating at only a fraction of its normal speed and the compressor discharge air may accordingly not be capable or producing enough energy to efficiently atomize liquid fuel. In that case, a separately driven compressor can be activated to supply air und pressure to the fuel injection nozzles to assist in atomizing the liquid fuel.

By means of dual fuel injection nozzles in accord with the invention an engine equipped therewith is provided with the capability of operating on a wide variety of gas and liquid fuels independently or simultaneously, efficient combustion is promoted and the emission of smoke from the engine can be minimized. Furthermore, the construction of such nozzles avoids the impingement of gaseous fuel on fuel injection nozzle components that has in the past caused flow disturbances, degradation of combustion efficiency, and loss of durability in gas turbine engines operated on gaseous fuels.

An example of an injection nozzle according to the invention and a gas turbine engine employing such nozzles will now be described with reference to the accompanying drawings in which:—

Figures 1A and 1B, taken together, constitute a partly sectioned side view of one gas turbine engine which can be equipped with dual fuel nozzles constructed in accordance with the present invention;

Figure 2 shows, schematically, the combustor of the gas turbine engine illustrated in Figures 1A and 1B and, in more detail, the manifold and fuel line system for supplying liquid fuel to the combustor;

Figure 3 is a fragmentary section through certain components of the liquid fuel supply system taken substantially along line 3—3 of Figure 2;

Figure 4 is a longitudinal section through one of the dual fuel nozzles;

Figure 5 is a partial view of the inlet end of the nozzle; it is taken substantially at right angles to the section identified as Figure 4;

Figure 6 is a fragment of Figure 4 to an enlarged scale;

Figure 7 is an external view of the combustor; it also shows manifold and associated lines incorporated in the fuel supply system and employed to supply gas as well as liquid fuels to the fuel injection nozzles and to supply air pressure to them to assist in the atomization of liquid fuel during light-off or start-up;

Figure 8 is a fragment of Figure 1B to a larger scale showing the upstream or dome end of the gas turbine engine combustor and one of the several fuel injection nozzles; and,

Figure 9 is a schematic illustration of one exemplary system for supplying assist air to the fuel injection nozzles.

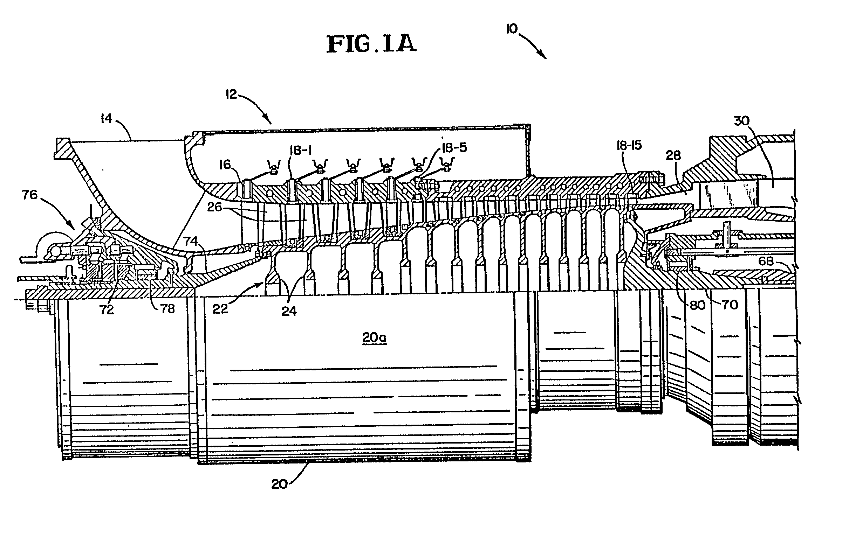

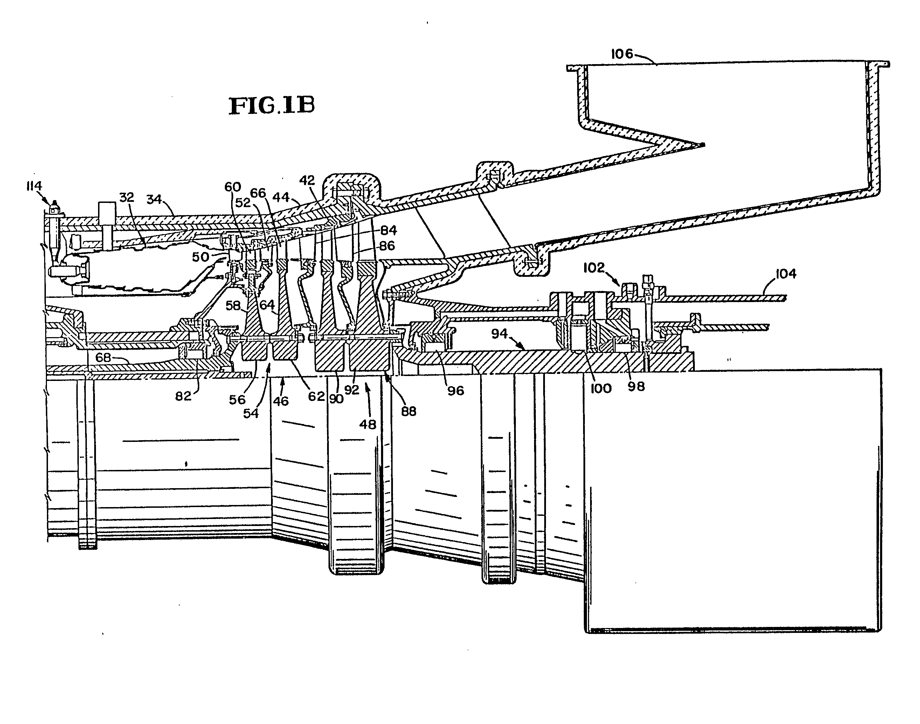

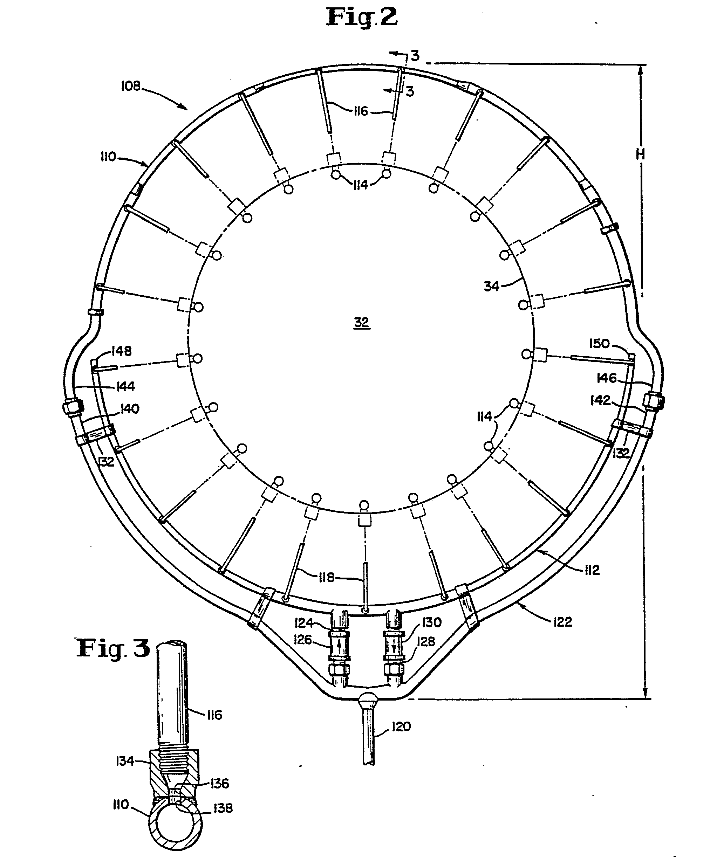

Referring now to the drawing, Figures 1A and 1B depict a two-shaft, gas turbine engine 10 which is equipped with a dual fuel supply system (see Figures 2—7) embodying and constructed in accord with the principles of the present invention.

Engine 10 includes a fifteen-stage axial flow compressor 12 with a radial-axial inlet 14. Inlet guide vanes 16 and stators 18 of the compressor are supported from compressor housing 20 with the guide vanes and the stators 18—1 through 18—5 of the first five stages being pivotally mounted so that they can be adjusted to control the flow of air through the compressor.

The fifteen-stage rotor 22 of compressor 12 is composed of discs 24 with vanes 26 fixed thereto. The discs are joined e.g. by electron beam welding into a single unit.

Compressor housing 20 is split longitudinally on a vertical plane through the axial centerline of the housing into two sections 20a (only one of which is shown). This accommodates installation of the compressor rotor and facilitates access to the rotor blades, guide vanes, and stators for inspection, cleaning, and replacement.

The high pressure air discharged from compressor 12 flows through an annular, diverging diffuser 28 into an enlarged plenum 30 and from the latter to an annular combustor 32 housed in a case 34.

The hot gases generated in combustor 32 are discharged into a nozzle case 42 supported in an annular turbine housing 44. The hot gases are expanded first through a two-stage gas producer turbine 46 and then through a two-stage power turbine 48.

Gas producer turbine 46 has internally cooled, first and second stage nozzles 50 and 52 and a two-stage rotor 54.

The first stage 56 of gas producer turbine rotor 54 includes a disc 58 to which internally cooled, radially extending blades 60 are fixed. The second stage 62 includes a disc 64 with uncooled, radially extending blades 66 mounted on its periphery.

The two stages of gas producer turbine rotor 54 are bolted to each other and, in cantilever fashion, to the rear end of a forwardly extending shaft 68. Shaft 68 is keyed to rear compressor hub 70 which is bolted to compressor rotor 22, thereby drive-connecting gas producer turbine 46 to the compressor rotor.

The compressor rotor and gas producer turbine are rotatably supported by a thrust bearing 72 engaged with a front compressor hub 74 drive-connected to an accessory drive 76 and by tapered land bearings 78, 80 and 82.

Power turbine 48 includes first and second stage nozzles 84 and 86 also supported from nozzle case 42 and a rotor 88 having a first bladed stage 90 and a second bladed stage 92 bolted together for concomitant rotation. Neither the nozzles nor the rotor are cooled.

Rotor 88 is bolted to a shaft assembly 94 rotatably supported by tapered land bearings 96 and 98 and by a thrust bearing 100. The shaft assembly is connected through a coupling 102 to an output shaft assembly 104 which is the input for a generator, booster compressor, mechanical drive, or other driven unit.

Another major component of turbine engine 10 is an exhaust duct 106 for the gases discharged from the power turbine.

For the most part, the details of the gas turbine engine components discussed above are not relevant to the practice of the present invention. Therefore, they will be described only as necessary to provide a setting for and facilitate an understanding of the latter.

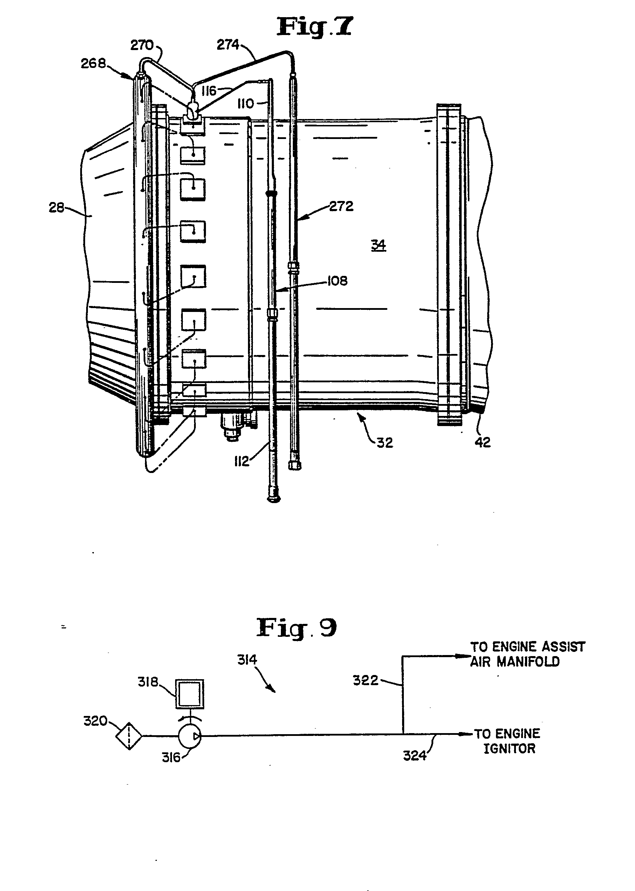

Referring now primarily to Figures 2 and 7, liquid fuel is supplied to the combustor 32 of gas turbine engine 10 by a liquid fuel supply system 108 which includes an upper manifold 110, a lower manifold 112, and injection nozzles 114 supplied with fuel from upper manifold 110 through fuel lines 116 and from lower manifold 112 through fuel lines 118. Fuel is supplied to the upper manifold 110 through fuel lines 120 and 122 and to the lower manifold 112 through a fuel line 124 extending between that manifold and fuel supply line 122. A check valve 126 is incorporated in fuel line 124 for purposes that will become apparent hereinafter.

Finally, fuel supply system 108 also includes a fuel return line 128 connected between lower manifold 112 and fuel line 122. A second check valve 130 is incorporated in the fuel return line.

The upper and lower manifolds 110 and 112 together make up what is termed a split manifold. Both are of semicircular configuration; and, together, they concentrically encircle casing 34 of combustor 32. The two manifolds are fastened together in this relationship by brackets 132 which are not of critical construction as far as the present invention is concerned.

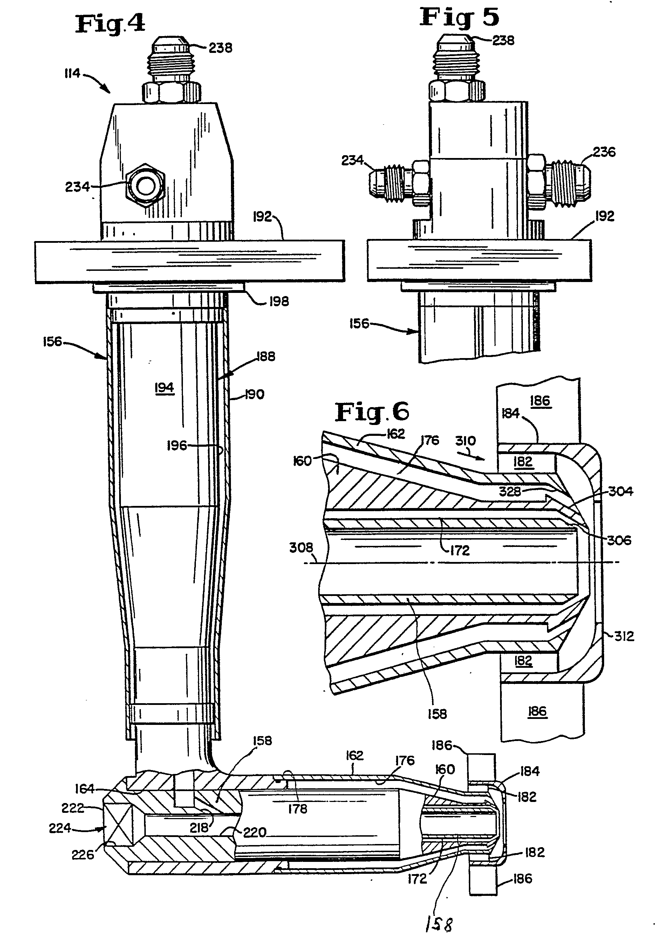

The fuel lines 116 and 118 through which liquid fuel flows from the upper and lower manifolds to fuel injection nozzles 114 extend radially inward from the manifolds to the injection nozzles at essentially equal intervals therearound. At their outer ends, they are connected to the manifolds by tubular fittings 134 best shown in Figure 3. Apertures 136 in the fittings and 138 in the manifolds with which they are associated provide communication between the latter and fuel lines 116 and 118.

The line 122 through which fuel is supplied to upper manifold 110 is, like the latter, of generally arcuate configuration. It is spaced concentrically from, and surrounds, lower manifold 112; and its upper ends 140 and 142 are connected, on opposite sides of the fuel supply system, to the lower ends 144 and 146 of upper manifold 110.

The line 120 by which fuel line 122 is supplied communicates with the latter at the bottom thereof and mid way between the upper ends 140 and 142 of line 122.

Particularly under the low fuel pressure conditions existing at light-off, the hydraulic head H across the fuel supply system would result in the fuel reaching those fuel injection nozzles 114 toward the bottom of combustor 32 much more rapidly than the uppermost injection nozzles if a simple ring type manifold were employed to supply fuel to the injection nozzles. This inequality of flow distribution is significantly reduced in the illustrated liquid fuel supply system 108 by the flow equalizing arrangement composed of fuel line 124 and check valve 126.

Specifically, fuel line 124 is connected between line 122 and lower manifold 112 approximately mid way between the two ends 148 and 150 of the lower manifold, the liquid fuel thereby flowing from line 122 through line 124 into, and in opposite directions through, the lower manifold.

Check valve 126, which is oriented to allow fuel to flow in the direction just described, is set to open when the pressure in fuel line 122 reaches on-half of the hydraulic head H across the system. That reduces the fuel pressure at the bottom of lower manifold 112; and, consequently, the pressure vertically across that manifold (check valve outlet pressure — H/2) more nearly equals the pressure across the upper manifold 110 and its fuel supply line 122 (line pressure in 122 — H) than would otherwise be the case.

Also, by thus reducing the effect of the hydraulic head across fuel supply system 108, the arrangement just described results in a more uniform flow of fuel to the fuel injection nozzles at different elevations during the operation of the engine with which the fuel supply system is associated. This, too, results in more efficient combustion and lower emission levels.

The final feature of fuel supply system 108 alluded to above — fuel return line 128 — is provided so that fuel can drain from lower manifold 112 back into fuel lines 122 and 120 when the engine with which the fuel supply system is associated is shut down. The check valve 130 in line 128 is oriented for fuel flow in that direction. As long as the engine is running and fuel is being supplied to it through fuel lines 120 and 122, the pressure in line 122 is higher than that in lower manifold 112 by virtue of the pressure drop across check valve 126; and valve 130 accordingly remains closed. When the engine is shut down, however, the pressure in lines 120 and 122 drops; and the hydraulic head on the fuel in the lower manifold consequently causes the check valve to open, thereby allowing the fuel to drain out of the manifold through return line 128.

As shown in Figure 2, combustor 32 has a circular section, and the fuel injection nozzles 114 are spaced around this casing in a circular array at essentially equal intervals with the discharge or downstream ends of the injectors located inside of, and discharging atomized fuel into, combustor 32.

Fuel injection nozzles 114 are of the air blast type. Fuel supplied to the nozzles is atomized by air discharged from the compressor 12 of gas turbine engine 10 and mixed with an approriate amount of air; and the fuel-air mixture is then discharged into combustor 32.

Referring again to the drawing, Figures 4—6 illustrate, in more detail, one of the fuel injection nozzle 114 referred to above. Fuel injection nozzles 114 are component parts of the liquid fuel supply system 108 employed to introduce liquid fuel into the combustor 32 of gas turbine engine 10. As suggested above, and as will be described in detail hereinafter, these same nozzles can also be utilized to instead, or simultaneously, introduce a gaseous fuel such as natural gas or sewer gas into the combustor.

The illustrated fuel injection nozzle 114 includes an elongate, circularly sectioned stem 156 and a nozzle body 158 and shrouds 160 and 162, all oriented at a right angle to stem 156. The nozzle body extends, at its upstream end, into a cylindrical bore 164 through the inner end of the stem; and it is jointed to the stem e.g. by brazing.

Shroud 160 cooperates with nozzle body 158 at the downstream or discharge end thereof to form an annular discharge passage 172 for liquid fuel. The upstream end of shroud 160 surrounds nozzle body 158; and the shroud is fixed to the nozzle body, again typically as by brazing.

The second of the above-mentioned shrouds 162, concentrically surrounds, and cooperates with, shroud 160 to form an annular passage 176 for gaseous fuels.

At its upstream end, shroud 162 is seated in an annular recess 178 at the inner end of fuel injection nozzle stem 156; it is there joined to the latter.

At its forward or discharge end, shroud 162 supports an array of equiangularly spaced, radially extending, secondary air swirl vanes 182, only two of which are shown. Surrounding, and supported by, swirl vanes 182 is a cylindrical, secondary air shroud 184.

This shroud supports an array of equiangularly spaced, radially extending swirl vanes 186, two of which are shown in Figure 4.

The fuel injection nozzle stem 156 from which the just described components are supported is made up of an inner component 188 in which the nozzle body accepting bore 164 is formed, a heat shield 190 surrounding the latter, and a mounting flange 192. As best shown in Figure 4, the external surface 194 of component 188 is reduced in width over much of the length of the fuel injection nozzle stem. This, in cooperation with heat shield 190, provides a dead air space 196 which insulates stem member 188, and the fuel flowing through it, from elevated ambient temperatures externally of the fuel injection nozzle.

Mounting plate or fitting 192 is seated on, and positioned along, fuel injection nozzle stem 156 by an annular flange 198 on the latter.

Longitudinally extending passages (not shown) for liquid fuels, gaseous fuels, and assist air employed to promote atomization at light-off are formed in fuel injection nozzle stem member 188. Fuel introduced into the passage for liquid fuels flows through it and then through fuel distribution orifices in the nozzle body (likewise not shown) into the liquid fuel discharge passage 172 between the nozzle body and shroud 160.

The passage in fuel injection nozzle stem 156 for gas fuels is inclined toward the discharge end of the injection nozzle at the inner end of the passage. There, it communicates with the annular gaseous fuel passage 176 formed between nozzle body 158 and shroud 162.

Assist air introduced into nozzle stem 156 flows from the latter through an inclined passage 218 in that component into a primary air passage 220 which extends from end to end of nozzle body 158 and is concentric with the axial centerline of that component.

Primary air is introduced into passage 220 through the entrance 222 thereto at the upstream end of the nozzle body. A swirler 224 is mounted in a recess 226 at the upstream end of nozzle body 158 to impart a rotational component to primary air introduced into central passage 220.

Referring now primarily to Figure 5, liquid fuels, gaseous fuels, and assist air are introduced into the passages in fuel injection nozzle stem 156 through fittings 234, 236, and 238, respectively. The details of those fittings and the manner in which they communicate with the several flow passages in the fuel injection nozzle stem 156 are not part of my invention. These details will accordingly not be described herein.

The system via which liquid fuel reaches the just-described fitting 238 of fuel injection nozzle 114 was described above. Referring now to Figure 7, gaseous fuels are supplied to fuel injectors 114 via a circular manifold 268 which also surrounds and is supported from combustor case 34. Lines 270 spaced equiangularly therearound connect the manifold to the several fuel injection nozzles 114.

As shown in Figure 7, gas turbine engine 10 is also equipped with a circular or annular air assist manifold 272. Like the gas and liquid fuel manifolds, the air assist manifold surrounds and is supported from the combustor case. That manifold is connected to the fittings 238 of the several fuel injection nozzles 114 by an equiangularly spaced array of air supply lines 274.

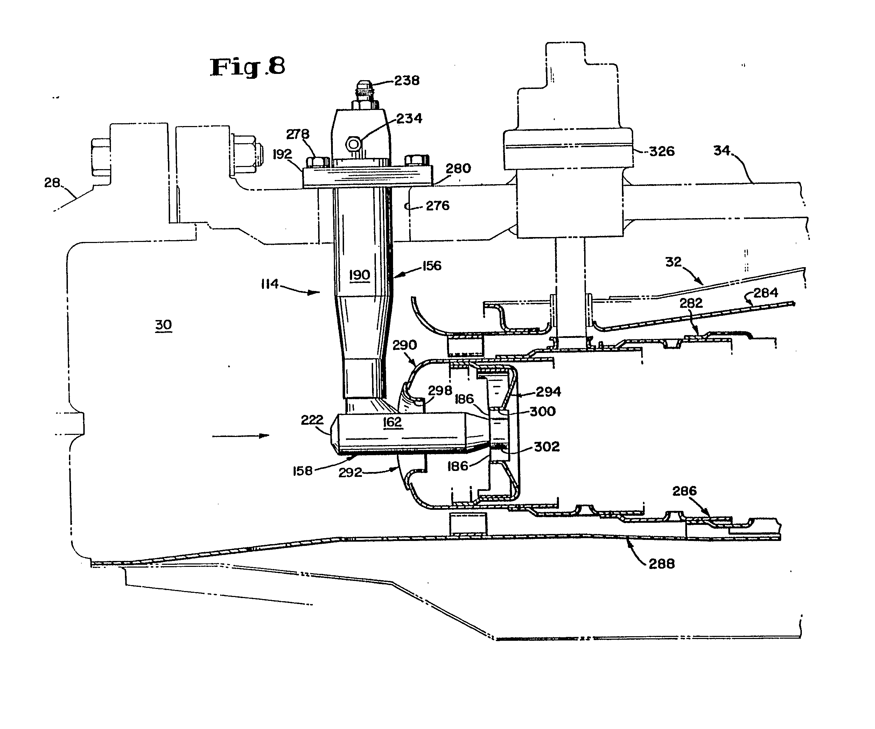

Referring still to the drawing, Figure 8 shows in more detail the manner in which fuel injectors 114 are supported from combustor case 34 and the manner in which combustor air is supplied to combustor 32.

The fuel injection nozzle 114 illustrated in Figure 8 extends radially through an opening 276 in the combustor case with its mounting flange 192 seated on the outer surface of the latter. The injector is secured in place as by bolts 278 with a seal 280 being employed to keep compressor discharge air from escaping through the joint between the combustor case and the mounting flange.

The illustrated combustor 32 is of the annular type. The combustor has a circularly sectioned outer liner 282 surrounded by an outer shroud 284 and a concentrically disposed, circularly sectioned inner liner 286 which surrounds an inner shroud 288.

At the upstream end of combustor 32, the annular gap between outer combustor liner 282 and inner combustor liner 286 is spanned by an annular, generally U-sectioned, combustion dome 290. Also at this end of the combustor and at stations corresponding to the locations of fuel injection nozzles 114 are combustion air inlet guide members 292 and circular, sliding seal plates 294.

The details of the combustor as just described are not part of the present invention, and they will accordingly be alluded to hereinafter only as necessary to facilitate an understanding of that invention.

Referring still to Figure 8, that inner, longitudinally extending part of fuel injection nozzle 114 made up of nozzle body 158 and shrouds 160 and 162 extends through a central opening 298 in combustion air inlet guide member 292 and through a central opening 300 in sliding seal plate 294, leaving an annular passage 302 between the seal plate and fuel injection nozzle secondary air shroud 184. Swirl vanes 186 span, and impart a rotational component to, combustion air discharged through this passage into combustor 32.

Referring now primarily to Figures 4, 6 and 8, liquid fuel introduced into fuel injection nozzle 114 flows into the discharge passage 172 between nozzle body 158 and shroud 160 as discussed above. The discharge end 304 of the shroud tapers inwardly, and the discharge end 306 of the nozzle body is configured to match. Consequently, the liquid fuel is discharged from the fuel injection nozzle in the form of a thin film toward the axial centerline 308 of that longitudinally extending part of the fuel injection nozzle.

This thin film of liquid fuel is contacted, and atomized, by the high velocity, swirling, primary combustion air discharged from the central air passage 220 through nozzle body 158, the air mixing with the fuel as atomization proceeds.

Secondary combustion air flows through and from air inlet guide member 292 in the direction indicated by arrow 310 in Figure 6 through swirl vanes 182 which, accordingly, impart a rotational component to the secondary air. Shroud 184 has an inwardly inclined, annular lip 312. Consequently, the swirling secondary combustion air is directed inwardly and into contact with the mixing, atomizing fuel and primary combustion air. This promotes the atomization of the liquid fuel and the distribution of the atomized fuel in the combustion mixture.

The resulting fuel-air mixture then expands radially and is contacted by the rototing air exiting from the passage 302 in which swirl vanes 186 are located. This produces the air-fuel (or stoichiometric) ratio needed for efficient combustion. It also generates the fuel-air mixture swirl angle, and the distribution and recirculation of the mixture in combustor 32, required for efficient combustion.

As indicated above, the primary and secondary combustion air as well as that formed into a swirling annulus by vanes 186 is taken from the discharge side of compressor 12. More specifically, air discharged from the compressor flows through diverging diffuser 28 and is dumped into the forward part of plenum 30, decreasing the flow velocity of the air. From plenum 30 the air flows through air inlet guides 292, and, also, into heat transfer relationship with the outer and inner liners 282 and 286 of combustor 32 to cool those combustor components. The details of the compressor-combustor interface, which are not part of the present invention, may be found in US—A—4,167,907.

As discussed above, the compressor discharge pressure may not be high enough at light-off to guarantee proper atomization of liquid fuel via the mechanisms just described; and, as was also discussed, assist air may be introduced into fuel injection nozzle 114 via fitting 238 for that purpose.

Figure 9 shows, schematically, one of several systems that may be employed to supply the atomization assist air.

The exemplary system 312 illustrated in that Figure includes an air pump 316 driven by a diesel engine 318. Air is pumped through a filter 320 and then through lines 322 and 324 to the air assist manifold and to a torch type ignitor 326 (see Figure 8) provided to ignite the fuel during light-off.

Referring again to Figures 4, 6, and 8, the operation of injectors 114 on a gaseous fuel is comparable to the above-described operation on liquid fuel. In the case of the gaseous fuel, however, the fuel is discharged from injection nozzle 114 through radially inwardly directed, equiangularly spaced ports 328 at the downstream end of nozzle 114 with a momentum which allows the gas to mix with the swirling primary and secondary combustion air streams without impinging on the lip of shroud 160. This is important as impingement on that lip or other components of the nozzle could create flow disturbances and consequent degradation in efficiency of the combustion process.

The mixture formed by the contact between the fuel and the primary and secondary combustion air streams then, as in the case of the liquid fuel-air mixture, expands radially outward into contact with the swirling air discharged through swirl vanes 186. Thereafter, as in the case of the liquid fuel and as it reaches the combustion zone in combustor 32, a mixture with the correct ratio of fuel and with the swirl angle, distribution, and recirculation needed for efficient combustion is formed.

Fuel injectors 114 have above been described as if engine 10 were to be operated on only a liquid fuel or only a gaseous fuel. This is not a requisite, however, as the injectors can be employed to supply both types of fuel at the same time, if desired.

**Claims**

1. A dual fuel injection nozzle (114) for introducing liquid and/or gaseous fuel and combustion air, in use, into a combustor (32), the nozzle having an elongate cylindrical body (158) with a primary air passage (220) extending through and opening at one discharge end (306) of the body; an annular liquid fuel passage (172) concentrically surrounding the body, an annular gaseous fuel passage (176) concentrically surrounding the body and opening adjacent to the discharge end (306) of the body; and means for introducing liquid and gaseous fuel into the liquid fuel passage and gaseous fuel passage respectively, whereby in use, liquid and/or gaseous fuel and air are mixed upon leaving the nozzle; characterized in that the liquid fuel passage (172) is formed between the body (158) and a surrounding liquid fuel shroud (160) and opens towards the longitudinal axis (308) of the body immediately beyond the discharge end (306) of the body; and in that the gaseous fuel passage (176) is formed between the liquid fuel shroud (160) and a surrounding gaseous fuel shroud (162) and opens through an annular array of discharge ports (328) inclined towards the longitudinal axis (308) and positioned immediately beyond the discharge end (304) of the liquid fuel shroud (160).

2. A nozzle according to claim 1, further comprising means (224) in the primary air passage (220) for imparting a swirl to air passing through the air passage (220).

3. A nozzle according to claim 1 or claim 2, which has a passage (218) in the body through which air under pressure can be introduced into the primary air passage (220) to promote the atomization of liquid fuel during start up.

4. A nozzle according to any one of the preceding claims, which has an air shroud (184) forming a secondary air passage around the gas shroud (162), the secondary air passage being tapered at its discharge side towards the longitudinal axis (308) of the body at a position beyond the downstream end (306) of the body.

5. A nozzle according to claim 4, having means (182) within the air shroud (184) for imparting a swirl to air passing through the secondary air passage in use to stabilize the flame from the nozzle.

6. A gas turbine engine (10) comprising a compressor (12), a turbine (46, 48) for driving the compressor and for producing kinetic energy in a useful form; a combustor (32) for generating hot gases to drive the turbine, and means for supplying a liquid and/or gaseous fuel to the combustor, the means comprising an array of dual fuel injection nozzles (114) as defined in any one of the preceding claims.

**Patentansprüche**

1. Dual-Brennstoffeinspritzdüse (114) zum Einführen von Flüssigem und/oder gasförmigen Brennstoff und Verbrennungsluft beim Gebrauch in einen Brenner (32), wobei die Düse folgendes aufweist:

einen langgestreckten zylindrichen Körper (158) mit einem primären Luftdurchlaß (220), der sich durch den Körper hindurch erstreckt und an einem Abgabeende (306) desselben öffnet,

einen ringförmigen Flüssigbrennstoffdurchlaß (172), konzentrisch den Körper umgebend,

einen ringförmigen, gasförmigen Brennstoff-

durchlaß (176), konzentrisch den Körper und die Öffnung benachbart zum Abgabeende (306) des Körpers umgebend, und

Mittel zur Einführung von flüssigem und gasförmigem Brennstoff in den Flüssigbrennstoffdurchlaß bzw. den gasförmigen Brenstoffdurchlaß, wodurch beim Gebrauch flüssiger und/oder gasförmiger Brennstoff und Luft beim Verlassen der Düse gemischt werden,

dadurch gekennzeichnet, daß der Flüssigbrennstoffdurchlaß (172) zwischen dem Körper (158) und einer umgebenden Flüssigbrennstoffabdeckung (160) gebildet ist und sich zur Längsachse (308) des Körpers hin unmittelbar jenseits des Abgabeendes (306) des Körpers öffnet, und daß der gasförmige Brennstoffdurchlaß (176) zwischen der Flüssigbrennstoffabdeckung (160) und einer umgebenden gasförmigen Brennstoffabdeckung (162) gebildet ist und sich durch eine Ringanordnung von Abgabeöffnungen (328) öffnet, und zwar geneigt zur Längsachse (308) hin und positioniert unmittelbar jenseits des Abgabeendes (304) der Flüssigbrennstoffabdeckung (160).

2. Düse nach Anspruch 1, wobei Mittel (224) in dem primären Luftdurchlaß (220) vorgesehen sind, um eine Verwirbelung der durch den Luftdurchlaß (220) laufenden Luft aufzuprägen.

3. Düse nach Anspruch 1 oder 2, wobei ein Durchlaß (218) im Körper vorgesehen ist, durch den Luft unter Druck in den primären Luftdurchlaß (220) eingeführt werden kann, um die Atomisierung des Flüssigbrennstoffs während des Startens zu fördern.

4. Düse nach einem der vorhergehenden Ansprüche, wobei eine Luftabdeckung (184) einen sekundären Luftdurchlaß um die Gasabdeckung (162) herum bildet, und wobei der sekundäre Luftdurchlaß sich an seiner Abgabeseite zur Längsachse (308) des Körpers hin verjüngt, und zwar an einer Position jenseits des stromabwärts gelegenen Endes (306) des Körpers.

5. Düse nach Anspruch 4, wobei Mittel (182) innerhalb der Luftabdeckung (184) vorgesehen sind, um eine Verwirbelung der durch den sekundären Luftdurchlaß laufenden Luft im Gebrauch auszuprägen, um die Flamme von der Düse zu stabilisieren.

6. Gasturbinemotor (10) mit einem Kompressor (12), einer Turbine (46, 48) zum Antrieb des Kompressors und zur Erzeugung kinetischer Energie in brauchbarer Form, einen Brenner (32) zur Erzeugung heißer Gase zum Antrieb der Turbine und Mittel zur Lieferung eines Flüssigen und/oder gasförmigen Brennstoffs an den Brenner, wobei die Mittel eine Anordnung von dualen Brennstoffeinspritzdüsen (114) aufweisen, wie dies in irgendeinem der vorhergehenden Ansprüche definiert ist.

**Revendications**

1. Injecteur à deux carburants (114) permettant, en service, d'introduire un carburant liquide et/ou un carburant gazeux et de l'air de combustion, dans une chambre de combustion (32), l'injecteur comportant un corps cylindrique allongé (158) avec un passage (220) pour l'air primaire, qui traverse le corps et s'ouvre à une première extrémité de décharge (306) de celui-ci; un passage annulaire (172) pour le carburant liquide, entourant concentriquement le corps; un passage annulaire (176) pour le carburant gazeux, entourant concentriquement le corps et s'ouvrant à proximité de l'extrémité de décharge (306) du corps; et un moyen permettant d'introduire un carburant liquide et un carburant gazeux respectivement dans le passage pour le carburant liquide et dans le passage pour le carburant gazeux, de telle sorte qu'en service, le carburant liquid et/ou le carburant gazeux et l'air se mélangent à leur sortie de l'injecteur; caractérisé en ce que le passage (172) pour le carburant liquide est formé entre le corps (158) et une enveloppe (160) pour le carburant liquide, qui l'entoure et s'ouvre vers l'axe longitudinal (308) du corps, immédiatement au-delà de l'extrémité de décharge (306) du corps; et en ce que le passage (176) pour le carburant gazeux est formé entre l'enveloppe (160) pour le carburant liquide et un enveloppe (162) pour la carburant gazeux, qui l'entoure et s'ouvre par un réseau annulaire d'orifices d'éjection (328) inclinés vers l'axe longitudinal (308) et disposés immédiatement au-delà de l'extrémité de décharge (304) de l'enveloppe (160) pour le carburant liquide.

2. Injecteur selon la revendication 1, comprenant en outre des moyens (224) situés dans le passage d'air primaire (220), pour communiquer un mouvement tourbillonnant à l'air qui traverse le passage d'air (220).

3. Injecteur selon la revendication 1 ou la revendication 2, qui comporte, dans le corps, un passage (218) par lequel de l'air sous pression peut être introduit dans le passage d'air primaire (220), pour favoriser l'atomisation du carburant liquide au cours du démarrage.

4. Injecteur selon l'une quelconque des revendications précédentes, qui comporte une enveloppe (184) pour l'air, formant un passage d'air secondaire autour de l'enveloppe (162) pour le gaz, le passage d'air secondaire étant effilé, sur son côté refoulement, vers l'axe longitudinal (308) du corps, en un point situé au-delà de l'extrémité aval (306) du corps.

5. Injecteur selon la revendication 4, comportant des moyens (182) situés à l'intérieur de l'enveloppe (184) pour l'air, pour en service, communiquer un mouvement tourbillonnant à l'air traversant le passage d'air secondaire, afin de stabiliser la flamme sortant de l'injecteur.

6. Moteur (10) à turbine à gaz comprenant un compresseur (12), une tubine (46, 48) pour entraîner le compresseur et pour produire de l'énergie cinétique sous une forme utilisable; une chambre de combustion (32) servant à produire des gaz chauds pour entraîner la turbine; et des moyens servant à alimenter la chambre de combustion avec un carburant liquide et/ou carburant gazeux, ces moyens comprenant une série d'injecteurs (114) à deux carburants tels qu'ils sont définis dans l'une quelconque des revendications précédentes.

# FIG.1A

0 071 420

FIG.1B

0 071 420

# Fig.2

# Fig.3

# Fig.4

# Fig 5

# Fig.6

## Fig.7

## Fig.9

TO ENGINE ASSIST
AIR MANIFOLD

TO ENGINE
IGNITOR

Fig.8